**Europäisches Patentamt**

**European Patent Office**

**Office européen des brevets**

(19)

(11) Veröffentlichungsnummer: **0 001 750**
**A1**

(12) **EUROPÄISCHE PATENTANMELDUNG**

(21) Anmeldenummer: **78100996.4**

(22) Anmeldetag: **26.09.78**

(51) Int. Cl.²: **H 01 C 7/02**
**H 01 C 1/144, B 23 K 11/12**

(30) Prioritat: **27.10.77 DE 2748239**

(43) Veröffentlichungstag der Anmeldung:
**16.05.79 Patentblatt 79/10**

(84) Benannte Vertragsstaaten:
**BE FR GB NL**

(71) Anmelder: **SIEMENS AKTIENGESELLSCHAFT Berlin
und München
Postfach 261
D-8000 München 22(DE)**

(72) Erfinder: **Raske, Hans-Erich
Königsdorferstrasse 13
D-8000 München 70(DE)**

(54) **Verfahren zum Kontaktieren eines elektrischen Kaltleiter-Widerstandes mit einem Anschlusselement.**

(57) Die Erfindung betrifft ein Verfahren zum Kontaktieren eines elektrischen Kaltleiter-Widerstandes mit einem Anschlusselement. Kaltleiter-Widerstände waren bisher weder löt- noch schweissbar. Zum Kontaktieren hat man den Kaltleiter-Widerstand mindestens an seiner Kontaktierungsstelle auf galvanischem Wege mit einer Edelmetallschicht plattiert und auf diese Edelmetallschicht das Anschlusselement angelötet. Eine derartige Verbindung ist wenig widerstandsfähig.

Gemäss der Erfindung wird vorgeschlagen, den Kaltleiter-Widerstand (1) auf galvanischem Wege mit einer Aluminiumschicht (4) zu beschichten und durch ein kombiniertes Ultraschall-Widerstandsschweissverfahren den Anschlussdraht (7) mit dem Kaltleiter-Widerstand zu verschweissen.

EP 0 001 750 A1

SIEMENS AKTIENGESELLSCHAFT     Unser Zeichen
Berlin und München     VPA 77 P 7172 EPC

Verfahren zum Kontaktieren eines elektrischen Kaltleiter-Widerstandes mit einem Anschlußelement

Die Erfindung bezieht sich auf ein Verfahren zum Kontaktieren eines elektrischen Kaltleiter-Widerstandes mit einem Anschlußelement, gemäß dem man den Kaltleiter-Widerstand auf galvanischem Wege, zumindest am Kontaktierungsort mit einem Metall beschichtet und als Anschlußelement einen aus Silber oder versilberten Kupfer bestehenden Draht verwendet und sodann unter Anwendung von Druck und Wärme diese beiden Teile miteinander verbindet.

Kaltleiter-Widerstände bestehen aus einem "Sintermetall-Werkstoff"; sie sind daher weder löt- noch schweißbar. Das Kontaktieren eines Kaltleiter-Widerstandes mit einem Anschlußelement geschieht auf verschiedenen Wegen. So ist es bekannt, den Kaltleiter-Widerstand am Ort seiner Kontaktierungsstelle mit einer Edelmetall- vorzugsweise Silberschicht auf galvanischem Wege zu beschichten; auf dieses Schichtmetall lötet man das ebenfalls aus Silber

Hs 1 Kow / 6.9.78

-2-

oder versilberten Kupferdraht bestehende Anschlußelement. Die Haftfestigkeit des Anschlußelementes ist
-bedingt durch die Haftfestigkeit der Silberschicht
am Kaltleiter-Widerstand- vergleichsweise gering. Es
ist nicht auszuschließen,daß die Anschlußelemente,
nämlich die Anschlußdrähte, gebogen werden. Dabei entsteht an der Kontaktierungsstelle ein Drehmoment, welches bei der vergleichsweisen geringen Haftfestigkeit
des Schichtmetalls leicht zum Ablösen des Anschlußdrähtchens vom Kaltleiter-Widerstand führt. Zur Vermeidung dieses Nachteiles wurde vorgeschlagen, den Anschlußdraht oder die Anschlußfahne mit dem Kaltleiter-
Widerstand durch eine Klemmverbindung zu kontaktieren.
Eine derartige Kontaktierung besitzt indessen den Nachteil, daß an der Berührungsstelle des Kaltleiter-Widerstandes mit dem Anschlußelement ein vergleichsweise
hoher Widerstand entsteht, der     zur örtlichen Erwärmung des Kaltleiter-Elementes führt. Dadurch kann
die elektrische Funktion des Kaltleiter-Widerstandes
erheblich beeinträchtigt werden. Fernerhin hat man versucht, das Anschlußelement gleich bei der Herstellung des
auf pulvermetallurgischem Wege gebildete Kaltleiter-
Widerstandes einzusintern. Hierbei ergeben sich indessen
die gleichen Nachteile, wie vorstehend genannt. Bei all
diesen Kontaktierungsverfahren besteht der Nachteil, daß
die Kaltleiter-Widerstände nur bis zu Temperaturen von
ca. 150$^{o}$ C belastbar sind.

Ausgehend vom eingangs genannten Verfahren liegt der Erfindung die Aufgabe zugrunde, einen Kaltleiter-Widerstand
zu schaffen, der bis zu einer Temperatur von ca. 290$^{o}$ C
funktionssicher belastbar ist. Das bekannte Verfahren soll
derart verbessert werden, daß bei einer erhöhten Haftfestigkeit und einem geringeren Herstellungsaufwand der
Übergangswiderstand an der Verbindungsstelle des Anschlußelementes mit dem mit einer Metallschicht plattierten Kaltleiter-Element vergleichsweise niederohmig ist. Diese Aufgabe wird gemäß der Erfindung dadurch gelöst, daß man als Metallschicht für den Kaltleiter-Widerstand Aluminium verwendet und das Anschlußelement unter Anwendung eines kombinierten Ultraschall-Widerstandsschweißverfahrens mit der Aluminiumschicht des Kaltleiters verschweißt.

Durch diese erfinderische Weiterbildung des bekannten Verfahrens erhält man eine vergleichsweise höhere Verbindungsfestigkeit des Anschlußelementes mit dem Kaltleiter-Widerstand. Es ist anzunehmen, daß dieser Erfolg darauf zurückzuführen ist, daß beim -an sich bekannten- kombinierten Ultraschall-Widerstandsschweißverfahren sich im plastisch bis schmelzflüssigen Zustand befindende Aluminium tiefer in die obere Materialstruktur des meist aus Barium-Titanat bestehenden Materials des Kaltleiter-Widerstandes eindringt und sich dort mit der Pulverstruktur durch Ansintern verbindet. Andererseits wird durch das zur Anwendung kommende Ultraschall-Widerstandsschweißverfahren auch eine metallische Verbindung zwischen dem Silber des Anschlußelementes und der Aluminiumschicht herbeigeführt. Man erreicht eine gute Haftfestigkeit auch unter Verwendung von Silber, Gold od. dgl. als Schichtmetall für den Kaltleiter-Widerstand, sofern man unter Anwendung des kombinierten Ultraschall-Widerstandsschweißverfahrens das Anschlußelement mit dem Kaltleiter-Widerstand verbindet, indessen ist jedoch der Aufwand an Material höher, wobei die Haftfestigkeit im Vergleich mit Aluminium als Schichtmaterial höchstens gleich, je nach Legierungszusätzen, meist jedoch geringer ist.

Bei der Herstellung der Kontaktverbindung zwischen dem Anschlußelement und dem Kaltleiter-Widerstand verfährt man vorteilhafterweise derart, daß man

-4-

a) das drahtförmige Anschlußelement im Bereich seiner Kontaktierungsstelle flachdrückt, derart, daß es flächig an der Kontaktierungsstelle aufliegt,

b) die Dicke der auf dem Kaltleiter-Widerstand aufgebrachten Aluminiumschicht in den Grenzen von 10 μm bis höchstens 20 μm hält,

c) ein Schweißpotential benachbart vom Anschlußelement gegen die Aluminiumschicht führt,

d) das Anschlußelement mit der Ultraschall-Sonotrode belastet und dabei eine Andruckkraft der Sonotrode von 40 bis 60 N/mm$^2$ einhält, sowie durch die Schweißstelle, bei einer Schweißspannung von 2 bis 3 V einen während einer Zeit von 2 bis 3 sec getakteten Schweißstrom von 40 bis 55 A leitet und

e) dabei anschließend während einer Dauer von weniger als 0,5 sec, jedoch mindestens 0,1 sec, die Sonotrode zu Ultraschallschwingungen erregt.

Die bei Kaltleiter-Widerständen zur Anwendung kommenden versilberten Kupferdrähte besitzen je nach den Belastungsgrenzen der Widerstände einen Durchmesser von etwa 0,3 bis 1,0 mm. Würde man das drahtförmige Anschlußelement an seiner Verbindungsstelle nicht abflachen, so wäre die Verbindungsfläche zu gering. Andererseits darf auch die Schichtdicke des Aluminiums nur in vergleichsweise engen Grenzen gehalten werden, da sonst die Schichtmasse zu groß ist; sie wirkt sodann als Puffer. Die Schichtmasse muß in das obere Materialgefüge des Kaltleiter-Widerstandes soweit eindringen, daß unter Anwendung von Druck und Wärme ein Ansintern erfolgen kann. Während des Schweißvorganges müssen die empirisch ermittelten Parameter eingehalten werden. Wesentlich ist es, daß man den vergleichsweise kurz gehaltenen Ultraschallimpuls mit einem Schweißstromimpuls überlagert. Beide Schweißimpulse und somit der Schweißverbindungsvorgang enden gleichzeitig.

0001750

-5-

In den Zeichnungen ist das Verfahren näher erläutert.
Ein aus Barium-Titanat auf pulvermetallurgischem Wege
gebildete Kaltleiter-Widerstand 1 wurde auf galvanischem
Wege im nahen Bereich seiner beiden Kontaktierungsstellen
2, 3 auf mit einer aus Aluminium bestehenden Schicht 4
belegt. Die Schichtdicke d beträgt z.B. 12 /um. Zum
Kontaktieren wird der Kaltleiter-Widerstand auf einen
Amboß 5 gelegt. Ein an seinem vorderen Ende 6 auf etwa
0,2 mm abgeflachter versilberter, 1 mm dicker Kupferdraht 7, nämlich das Anschlußelement, wird auf die
Kontaktierungsfläche gelegt. Eine Sonotrode 8, welche mit
einem hier nicht dargestellten Ultraschallerreger verbunden ist, liegt einerseits bei 9 am Schweißpotential
eines Schweißtransformators 13, wohingegen das andere
Schweißstrompotential 10 an der Aluminiumschicht 4 gelegen ist. In diesem Zustand wird die mit einem Waffelmuster versehene Arbeitsfläche 11 der Sonotrode 8 gegen
das Anschlußelement geführt; die Sonotrode drückt dieses
mit einer Kraft P von ca. 50 N/mm$^2$ gegen seine Widerlagefläche. Durch Auslösen von Schweißstromimpulsen bei einer
Spannung von 2 bis 3 V fließt nunmehr durch die Aluminiumschicht und das Anschlußelement ein Strom von 40 bis 50 A.
Dadurch wird die Aluminiumschicht im Bereich der Verbindungsstelle hoch erwärmt und plastisch bis schmelzflüssig, nach etwa 2 sec erregt man die Ultraschall-
sonotrode 8 und damit ihre Arbeitsfläche 11 zu Ultraschallschwingungen. Es erfolgt nunmehr eine innige Verbindung zwischen der Aluminiumschicht 4 und dem Kaltleiter-Widerstand 1 einerseits, sowie der Aluminiumschicht und dem Schichtmetall des Kupferdrahtes 7
andererseits.

Die Kontaktierung des Kaltleiter-Widerstandes 1 erfolgt
beidseitig, wie bei 12 angedeutet, in der gleichen Weise.

2 Patentansprüche
1 Figur

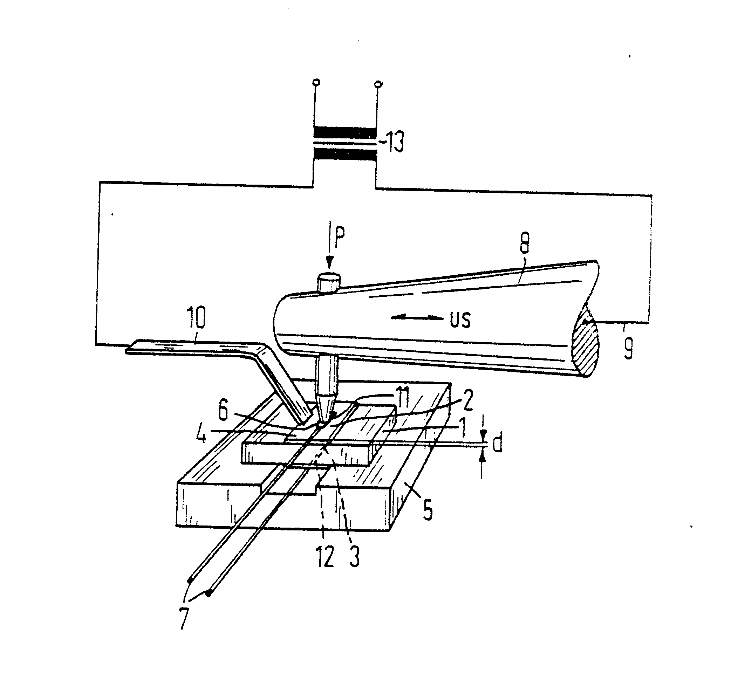

Patentansprüche

1. Verfahren zum Kontaktieren eines elektrischen Kaltleiter-Widerstandes mit einem Anschlußelement, gemäß dem man den Kaltleiter-Widerstand auf galvanischem Wege, zumindest am Kontaktierungsort mit einem Metall beschichtet und als Anschlußelement einen aus Silber oder versilberten Kupfer bestehenden Draht verwendet und sodann unter Anwendung von Druck und Wärme die beiden Teile miteinander verbindet, dadurch g e k e n n z e i c h - n e t , daß man als Metallschicht (4) für den Kaltleiter-Widerstand (1) Aluminium verwendet und sodann das Anschlußelement (7) unter Anwendung eines kombinierten Ultraschall-Widerstandsschweißverfahrens mit der Aluminiumschicht des Kaltleiters verschweißt.

2. Verfahren nach Anspruch 1, g e k e n n z e i c h - n e t durch folgende Verfahrensschritte, daß man
a) das drahtförmige Anschlußelement (7) im Bereich seiner Kontaktierungsstelle (6) flachdrückt, derart, daß es flächig an der Kontaktierungsstelle (2) des Kaltleiter-Widerstandes (1) aufliegt,
b) die Dicke (d) der auf den Kaltleiter-Widerstand aufgebrachten Aluminiumschicht in den Grenzen von 10 $\mu$m bis höchstens 20 $\mu$m hält,
c) das Schweißpotential benachbart vom Anschlußelement an die Aluminiumschicht legt,
d) das Anschlußelement mit der Ultraschall-Sonotrode (8) belastet und dabei eine Andruckkraft der Sonotrode von 40 bis 60 N/mm$^2$ einhält, sowie über die Schweißstelle (2) bei einer Schweißspannung von 2 bis 3 V einen während einer Zeit von 2 bis 3 sec getakteten Schweißstrom von 40 bis 55 A leitet und
e) dabei abschließend während einer Dauer von weniger als 0,5 sec, jedoch mindestens 0,1 sec, die Sonotrode zu Ultraschallschwingungen anregt.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 337 545 (WESTERN ELECTRIC COMP)<br><br>* Seite 2, linke Spalte, letzter Absatz bis Seite 5, linke Spalte, Absatz 1 *<br><br>& DE - A - 1 281 812<br><br>--- | 1,2 |
| | US - A - 3 676 211 (TII)<br><br>* Spalte 3, Zeile 36 bis Spalte 5, Zeile 68; Ansprüche 1,7,10-13 *<br><br>--- | 1 |
| | FR - A - 1 563 071 (SOCIETE DE PROSPECTION ELECTRIQUE SCHLUMBERGER)<br><br>* Seite 1, Absatz 3 bis Seite 2, Absatz 3; Zusammenfassung 1 *<br><br>--- | 1,2 |
| | US - A - 3 914 862 (TII)<br><br>* Spalte 3, Zeilen 21-51; Figur 2 *<br><br>--- | 2 |
| | US - A - 3 519 782 (BELL TELEPHONE LABORATORIES INC)<br><br>* Spalte 2, Zeile 26 bis Spalte 4, Zeile 22 *<br><br>--- | 1,2 |
| | US - A - 3 793 604 (GTE SYLVANIA INC)<br><br>* Spalte 1, Zeile 47 bis Spalte 2, Zeile 26 *<br><br>--- | 1 |

**KLASSIFIKATION DER ANMELDUNG (Int.Cl.⁴)**

H 01 C 7/02
1/144
B 23 K 11/12

**RECHERCHIERTE SACHGEBIETE (Int. Cl.³)**

H 01 C 7/02
1/144
1/142
B 23 K 11/12
H 01 C 7/04
H 01 L 21/607
21/603

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-02-1979 | GORUN |